# EUROPEAN PATENT APPLICATION

(11) **EP 3 747 537 A1**
(43) Date of publication of application: **09.12.2020**
(21) Application number: 19178819.9
(22) Date of filing: 06.06.2019
(51) Int. Cl.: B01J 10/00, B01J 19/00, B01J 19/24, C02F 11/18, C02F 103/16

(54) **REACTOR FOR TREATING A METAL CONTAINING ACID SOLUTION, IN PARTICULAR A PICKLING SLUDGE, AND/OR FOR REGENERATING AN ACID COMPONENT FROM A METAL CONTAINING ACID SOLUTION, PREHEATER DEVICE, METHOD**

(71) Applicant: CMI UVK GmbH, 56410 Montabaur (DE)
(72) Inventor: FABER, Sergej, 65594 Runkel (DE); QUIRMBACH, Arno, 56424 Moschheim (DE)
(74) Representative: Schwöbel, Thilo K.

(57) **Abstract**

The present invention relates to a reactor (30) for treating a metal containing acid solution (1), in particular a pickling sludge, and/or for regenerating an acid component from a metal containing acid solution (1), wherein the reactor (30) is configured such that:
--- the metal containing acid solution (1) is fed to the reactor (30),
--- a fuel (14) and a first gas or gas mixture (11), comprising oxygen, are fed to a heater device (36) of the reactor (30),
--- by means of at least part of the fuel (14) and at least part of the first gas or gas mixture (11), a heated second gas or gas mixture (12) is formed in the reactor (30), characterized in that the reactor (30) comprises a preheater device (20) for preheating the first gas or gas mixture (11) by means of the second gas or gas mixture (12) before the first gas or gas mixture (11) is fed to the heater device (36).

## Description

### BACKGROUND

The present invention relates to a reactor for treating a metal containing acid solution, in particular a pickling sludge, and/or for regenerating an acid component from a metal containing acid solution.

Moreover, the present invention related to a preheater device for a reactor.

Furthermore, the present invention relates to a method for treating a metal containing acid solution, in particular a pickling sludge, and/or for regenerating an acid component from a metal containing acid solution.

In a number of industrial fields - such as the iron and steel industry, the zinc plating industry etc. -, metal waste acid solutions that contain iron components and potentially non-ferrous metals arises during fabrication processes. In particular, such acid solutions arise in various technological processes, such as pickling processes and separation processes of different metal components contained in ores. In case the acid solutions are unwanted byproducts of an industrial process, they have been disposed of or stored as industrial waste for a long time. In recent years, the costs of disposal or treatment of such industrial waste have increased. Moreover, the involved acids themselves are comparably expensive such that it is desirable to regenerate them.

For instance, for an iron containing acid solution such as a pickling sludge, a hydrolysis, especially a pyrohydrolysis, can be performed in a reactor. In such reactors, high temperatures are employed for treating the acid solution such that solid iron oxide as well as an off-gas (or effluent gas), comprising evaporated acid, are yielded. The reactors/furnaces, especially roasters, typically comprise a burner apparatus as a heat source, which burns a fuel and provides the necessary heat. To save costs and for environmental reasons, it is desirable to reduce the consumed energy in such reactors.

### SUMMARY

It is therefore an object of the present invention to provide an efficient, especially energy-efficient, reactor or reactorsystem for treating a metal containing acid solution, in particular a pickling sludge, and/or for regenerating an acid component from a metal containing acid solution.

This objective is achieved by a reactor for treating a metal containing acid solution, in particular a pickling sludge, and/or for regenerating an acid component from a metal containing acid solution, wherein the reactor is configured such that:
--- the metal containing acid solution is fed to the reactor,
--- a fuel and a first gas or gas mixture, comprising oxygen, are fed to a heater device of the reactor,
--- by means of at least part of the fuel and at least part of the first gas or gas mixture, a heated second gas or gas mixture is formed in the reactor,
characterized in that the reactor comprises a preheater device for preheating the first gas or gas mixture by means of the second gas or gas mixture before the first gas or gas mixture is fed to the heater device.

It is thereby advantageously possible according to the present invention that a hot second gas or gas mixture that is formed or generated in a reactor when treating a metal containing acid solution, especially in a pyrohydrolysis reactor, is employed for preheating a first gas or gas mixture that is fed to the reactor and at least partly used together with a fuel for heating the waste containing acid solution in the reactor. Therein, an energy-efficient process may be established. For preheating the first gas or gas mixture, a preheater device is employed. In particular, the preheater device may be formed as part of the reactor or may be an apparatus contained in and/or connected to the reactor.

In particular, the second gas or gas mixture (or exhaust fume) that is formed or generated in the reactor has a (much) higher temperature than the first gas or gas mixture that enters the heater device of the reactor. According to the present invention, it is possible that part of the thermal energy of the second gas or gas mixture is advantageously employed for preheating the first gas or gas mixture before the first gas or gas mixture enters the heater device of the reactor. Thereby, the energy consumption of the reactor can be reduced.

According to the present invention, it is especially conceivable that the first gas or gas mixture is air.

According to the present invention, it is especially conceivable that the second gas or gas mixture is the gas/fume that is generated/formed in a reactor, such as a pyrohydrolysis reactor, when treating a metal containing acid solution, e.g., a pickling waste solution. Therein, the heated second gas or gas mixture is preferably formed in the reactor

(especially in addition to being formed by means of burning at least part of the fuel and at least part of the first gas or gas mixture) further by means of the metal containing acid solution.

Embodiments of the present invention are described in the dependent claims.

According to an embodiment of the present invention, it is preferred that the preheater device is configured such that a heat transfer between the first gas or gas mixture and the second gas or gas mixture is established by means of the preheater device before the first gas or gas mixture is fed to the heater device.

Thereby, the first gas or gas mixture may be preheated in the preheater device efficiently. It is preferred that the preheater device is configured such that the first gas or gas mixture is hermetically sealed from the second gas or gas mixture while the first gas or gas mixture is preheated by means of the second gas or gas mixture in the preheater device.

According to an embodiment of the present invention, it is preferred that the heater device is configured such that for forming the heated second gas or gas mixture at least part of the fuel is burned by means of at least part of the first gas or gas mixture.

In particular, it is preferred that the heater device comprises at least one (typically several) burner apparatuses, wherein the fuel is burned with the help of at least part of the first gas or gas mixture in said burner apparatus(es).

Additionally or alternatively, it is preferred that only part of the first gas or gas mixture (that is fed to the heater device) is used for burning the fuel while a remaining part of the first gas or gas mixture does not chemically react with the fuel. Said remaining part of the first gas or gas mixture is heated in the process and comprised in the heated second gas or gas mixture. The remaining part of the first gas or gas mixture, comprised in the heated second gas or gas mixture, may advantageously be employed for processing the metal containing acid solution inside the reactor.

According to an embodiment of the present invention, it is preferred that the preheater device is arranged at least partly around a first section of the reactor and/or at least partly around a second section of a gas exhaust of the reactor.

In particular, it is preferred according to an embodiment of the present invention that the preheater device is arranged around the full circumference of the first and/or second section.

According to an embodiment of the present invention, the preheater device and/or the reactor is configured such that the first gas or gas mixture is passed through a preheating section of the preheater device before being fed to the heater device, wherein the preheating section is bordered on its radially inner side at least partly by a radially inner wall of the preheater device and/or of the reactor, wherein preferably - by means of the radially inner wall - a heat transfer between the preheating section of the preheater device and the first section of the reactor and/or the second section of the gas exhaust of the reactor is established.

Thereby, it is possible according to an embodiment of the present invention that by means of the inner wall, a first/second section (or volume) of the reactor, through which the second gas or gas mixture flows, is thermally connected to a preheating section (or volume) of the preheater device, through which the first gas or gas mixture is guided before entering the heater device of the reactor. Thereby, a heat transfer between the second gas or gas mixture and the first gas or gas mixture can be realized. The material(s) comprised in the inner wall may be chosen such that a desired thermal conductivity is obtained.

According to an embodiment of the present invention, the preheater device comprises ribs, wherein the ribs are especially attached to the radially inner wall of the preheater device and/or of the reactor, wherein preferably at least part of the ribs are arranged parallel to an axial direction of the preheater device and/or in a circumferential direction around the radially inner wall.

Thereby, it is possible according to an embodiment of the present invention that an improved heat transfer is established by means of the ribs. The ribs are especially located in the preheating section of the preheater device, such that the first gas or gas mixture comes into contact with the ribs, when flowing through the preheating section. A particularly efficient preheating of the first gas or gas mixture may be obtained thereby. It is especially conceivable that the ribs are arranged with equidistant spacing around the full circumference of the inner wall.

According to an embodiment of the present invention, the preheater device comprises an entrance and an exit, wherein the preheater device is configured such that - by means of the entrance - the first gas or gas mixture enters into the preheater device, in particular into the preheating section of the preheater device, wherein the preheater device is configured such that - by means of the exit - the first gas or gas mixture exits the preheater device, in particular the preheating section of the preheater device, wherein the entrance is arranged at an upper part of the preheater device, wherein the exit is arranged at a lower part of the preheater device, especially such that the exit is closer to the heater device than the entrance.

In particular, it is thereby possible that the flow direction of the first gas or gas mixture in the preheater device is at least partly opposite to the flow direction of the second gas or gas mixture when passing through the preheater device, especially when passing through the first and/or second section of the reactor and/or gas exhaust.

The terms "upper" and "lower" especially refer to the installed situation of the reactor and preheater device on site. In particular, for the installed preheater device, the upper part is located further away from the ground (that the reactor is located on) than the lower part.

According to an embodiment of the present invention, it is preferred that the reactor comprises or is a roaster, preferably a spray roaster or a fluidized bed reactor.

Thereby, according to an embodiment of the present invention, the reactor can advantageously be configured for performing an efficient pyrohydrolysis.

According to an embodiment of the present invention, it is preferred that the preheater device is configured such that the first gas or gas mixture is heated by means of the second gas or gas mixture by at least 20°C, preferably by at least 40°C, more preferably by at least 60°C.

Thereby, it advantageously possible to save energy. It is preferably conceivable that the first gas or gas mixture, when exiting the preheater device, is at least 20°C, more preferably at least 40°C, still more preferably at least 60°C hotter than it was when entering the preheater device.

Additionally or alternatively, it is conceivable according to an embodiment of the present invention that during preheating the first gas or gas mixture by means of the second gas or gas mixture, the second gas or gas mixture is cooled by at least 10°C, preferably by at least 20°C, more preferably by at least 30°C, especially when passing through the preheater device, in particular through the first section of the reactor and/or the second section of the reactor and/or gas exhaust (from a first (lower) end of the preheater device to a second (upper) end of the preheater device).

According to an embodiment of the present invention, it is possible that the second gas or gas mixture enters the preheater device, especially the first and/or second section of the reactor and/or gas exhaust, at a temperature between 800°C and 900°C, preferably between 820°C and 870°C.

Alternatively or additionally, it is conceivable according to an embodiment of the present invention, that the first gas or gas mixture enters the preheater device at a temperature between 30°C and 70 °C, preferably between 40°C and 65°C, more preferably at around 60 °C. Alternatively or additionally, it is conceivable that the first gas or gas mixture leaves/exits the preheater device at a temperature between 80°C and 120°C, preferably between 90°C and 120°C.

According to an embodiment of the present invention, the metal containing acid solution comprises an iron chloride component and an acid component, wherein the metal containing acid solution especially further comprises a rinse water component, and/or a metal-salt component, wherein preferably the acid component comprises hydrochloric acid or is hydrochloric acid.

According to embodiment of the present invention, it is conceivable that the iron chloride component comprises ferric chloride, FeCl₃, and/or ferrous chloride, FeCl₂.

According to an embodiment of the present invention, the reactor is configured such that the metal containing acid solution is at least partly hydrolyzed in the reactor, at least partly yielding an evaporated acid component and an iron oxide component, wherein the yielded evaporated acid component is part of the second gas or gas mixture.

For instance, it is possible according an embodiment of the present invention that the second gas or gas mixture comprises oxygen, nitrogen, water, hydrochloric acid and carbon dioxide.

Moreover, the present invention relates to a preheater device for a reactor according to an embodiment of the present invention, wherein the preheater device is suitable for preheating the first gas or gas mixture by means of the second gas or gas mixture before the first gas or gas mixture is fed to the heater device.

It is therefore advantageously possible according to the present invention, especially according to the inventive preheater device, that a second gas or gas mixture that is formed or generated in a reactor treating a metal containing acid solution, especially in a pyrohydrolysis reactor, can be employed to preheat a first gas or gas mixture before feeding the first gas or gas mixture to the reactor. Therein, an energy-efficient process may be established.

According to an embodiment of the present invention, especially according to an embodiment of the inventive preheater device, it is preferred that the preheater device is suitable for establishing a heat transfer between the first gas or gas mixture and the second gas or gas mixture, especially before the first gas or gas mixture is fed to the heater device.

According to an embodiment of the present invention, especially according to an embodiment of the inventive preheater device, it is preferred that the preheater device is suitable for being arranged at least partly around a first section of the reactor and/or at least partly around a second section of a gas exhaust of the reactor.

According to an embodiment of the present invention, especially according to an embodiment of the inventive preheater device, it is preferred that the preheater device is suitable for passing the first gas or gas mixture through a preheating section of the preheater device before the first gas or gas mixture is fed to the heater device, wherein the preheating section is bordered on its radially inner side at least partly by a radially inner wall of the preheater device and/or of the reactor, wherein preferably - by means of the radially inner wall - the preheater device is suitable for establishing a heat transfer between the preheating section of the preheater device and the first section of the reactor and/or the second section of the gas exhaust of the reactor.

According to an embodiment of the present invention, especially according to an embodiment of the inventive preheater device, it is preferred that the preheater device comprises ribs, wherein the ribs are especially attached to the radially inner wall of the preheater device and/or of the reactor, wherein preferably at least part of the ribs are arranged parallel to an axial direction of the preheater device and/or in a circumferential direction around the radially inner wall.

According to an embodiment of the present invention, especially according to an embodiment of the inventive preheater device, it is preferred that the preheater device comprises an entrance and an exit, wherein the preheater device is configured such that - by means of the entrance - the first gas or gas mixture enters into the preheater device, in particular into the preheating section of the preheater device, wherein the preheater device is configured such that - by means of the exit - the first gas or gas mixture exits the preheater device, in particular the preheating section of the preheater device, wherein the entrance is arranged at an upper part of the preheater device, wherein the exit is arranged at a lower part of the preheater device, especially such that the exit is closer to the heater device than the entrance.

According to an embodiment of the present invention, especially according to an embodiment of the inventive preheater device, it is preferred that the preheater device is suitable for heating the first gas or gas mixture by at least 20°C, preferably by at least 40°C, more preferably by at least 60°C by means of the second gas or gas mixture.

Furthermore, the present invention relates to a method for treating a metal containing acid solution, in particular a pickling sludge, and/or for regenerating an acid component from a metal containing acid solution, wherein the method comprises at least the following steps:
--- the metal containing acid solution is fed to a reactor,
--- a first gas or gas mixture, comprising oxygen, and a fuel are fed to a heater device of the reactor,
--- by means of at least part of the fuel and at least part of the first gas or gas mixture, a heated second gas or gas mixture is formed in the reactor,
characterized in that the first gas or gas mixture is preheated by means of the second gas or gas mixture before the first gas or gas mixture is fed to the heater device.

It is therefore advantageously possible according to the present invention that a second gas or gas mixture that is formed or generated in a reactor treating a metal containing acid solution is employed to preheat a first gas or gas mixture that is used together with a fuel for heating the waste containing acid solution in the reactor. Therein, an energy-efficient process may be established.

According to an embodiment of the present invention, especially according to an embodiment of the inventive method, it is preferred that the reactor comprises a preheater device for preheating the first gas or gas mixture by means of the second gas or gas mixture, wherein by means of the preheater device a heat transfer between the first gas or gas mixture and the second gas or gas mixture is established, wherein the preheater device is preferably arranged at least partly around a first section of the reactor and/or at least partly around a second section of a gas exhaust of the reactor.

According to an embodiment of the present invention, especially according to an embodiment of the inventive method, it is preferred that the first gas or gas mixture is passed through a preheating section of the preheater device before being fed to the heater device, wherein the preheating section is bordered on its radially inner side at least partly by a radially inner wall of the preheater device and/or of the reactor, wherein preferably - by means of the radially inner wall - a heat transfer between the preheating section of the preheater device and the first section of the reactor and/or the second section of the gas exhaust of the reactor is established.

According to an embodiment of the present invention, especially according to an embodiment of the inventive method, the preheater device comprises an entrance and an exit, wherein - by means of the entrance - the first gas or gas mixture enters into the preheater device, in particular into the preheating section of the preheater device, wherein - by means of the exit - the first gas or gas mixture exits the preheater device, in particular the preheating section of the preheater device, wherein the entrance is arranged at an upper part of the preheater device, wherein the exit is arranged at a lower part of the preheater device, especially such that the exit is closer to the heater device than the entrance.

In particular, it is thereby possible that the flow direction of the first gas or gas mixture in the preheater device is at least partly opposite to the flow direction of the second gas or gas mixture inside the preheater device, especially inside the first and/or second section of the reactor and/or gas exhaust.

The terms "upper" and "lower" especially refer to the installed situation of the reactor and preheater device on site. In particular, for the installed preheater device, the upper part is located further away from the ground (reactor is located on) than the lower part.

According to an embodiment of the present invention, especially according to an embodiment of the inventive method, it is preferred that during preheating the first gas or gas mixture by means of the second gas or gas mixture, the first gas or gas mixture is heated by at least 20°C, preferably by at least 40°C, more preferably by at least 60°C.

According to an embodiment of the present invention, especially according to an embodiment of the inventive method, it is preferred that the metal containing acid solution is at least partly hydrolyzed in the reactor, at least partly yielding an evaporated acid component and an iron oxide component, wherein the yielded evaporated acid component is part of the second gas or gas mixture.

The features, embodiments and advantages described in the context of the inventive method or in the context of an embodiment of the inventive method may also apply to the inventive reactor or reactorsystem or to the inventive preheater device. The features, embodiments and advantages described in the context of the inventive reactor or in the context of an embodiment of the inventive reactor may also apply to the inventive method or to the inventive preheater device. The features, embodiments and advantages described in the context of the inventive preheater device or in the context of an embodiment of the inventive preheater device may also apply to the inventive method or to the inventive reactor or reactorsystem.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a reactor according to an embodiment of the present invention.
Figure 2 schematically illustrates a reactor according to an embodiment of the present invention.
Figure 3 schematically illustrates a preheater device according to an embodiment of the present invention.
Figure 4 schematically illustrates a preheater device according to an embodiment of the present invention.
Figure 5 schematically illustrates a close up of an upper part of a preheater device according to an embodiment of the present invention.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

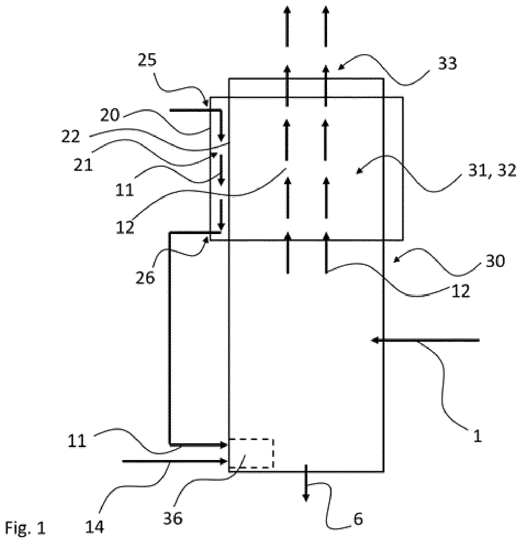

In **Figure 1**, an embodiment of a reactor 30 for treating a metal containing acid solution 1, in particular a pickling sludge, and/or for regenerating an acid component from a metal containing acid solution 1 is schematically illustrated. Preferably, the reactor 30 is a spray roaster or a fluidized bed reactor. The reactor system is configured such that the metal containing acid solution 1 is fed to the reactor 30. The reactor 30 comprises a heater device 36, which preferably comprises one or a plurality of burner apparatuses 36. A fuel 14 and a first gas or gas mixture 11 are fed to the heater device 36. Preferably, the first gas or gas mixture 11 is air. By means of the heater device 36 (especially by means of the burner apparatus(es)) the fuel 14 is burned together with part of the first gas or gas mixture 11, creating a heated second gas or gas mixture 12, which chemically reacts with the metal containing acid solution 1 inside the reactor 30. Thereby, a solid iron oxide component 6 is obtained and an acid component (especially hydrochloric acid) is absorbed by the second gas or gas mixture 12. The hot second gas or gas mixture 12 travels to a gas exhaust 33, which is typically located at an upper part of the reactor 30. Therein, the second gas or gas mixture passes through a first section 31 of the reactor and/or a second section 32 of the gas exhaust 33. A preheater device 20 is arranged around said first and/or second section 31, 32 of the reactor 30/gas exhaust 33. The preheater device 20 comprises a preheating section 21. Located between the first/second section 31, 32 (which the hot second gas or gas mixture 12 passes through) and the preheating section 21 is a radially inner wall 22, which separates the preheating section 21 from the first/second section 31, 32. The radially inner wall 22 may be fitted out or lined with a protective layer on its inner side, which faces the first/second section 31, 32 for protecting the inner wall from the second gas or gas mixture 12 and the high temperatures. The system is configured such that the first gas or gas mixture 11 passes through the preheating section 21 of the preheater device 20 before the first gas or gas mixture 11 is fed to the heater device 36 of the reactor 30. In particular, the first gas or gas mixture 11 enters into the preheating section 21 by means of an entrance 25. The entrance 25 is located at an upper part 27 of the preheater device 20. After entering into the preheater device 20, the first gas or gas mixture 11 travels through the preheating section 21 until it exits the preheater device 20 at an exit 26 of the preheater device 20, which is located at a lower part 28 of the preheater device 20. Thereby, while being inside the preheating section 21, the flow direction of the first gas or gas mixture 11 is at least partly opposite to the flow direction of the second gas or gas mixture 12 in the first/second section 31, 33. While the first gas or gas mixture 11 passes through the preheating section 21, a heat transfer between the first gas or gas mixture 11 and the second gas or gas mixture 12 is established with the help of the radially inner wall 22. As such, the first gas or gas mixture 11 is preheated by means of the second gas or gas mixture 12 before the first gas or gas mixture is fed to the heater device 36 of the reactor 30.

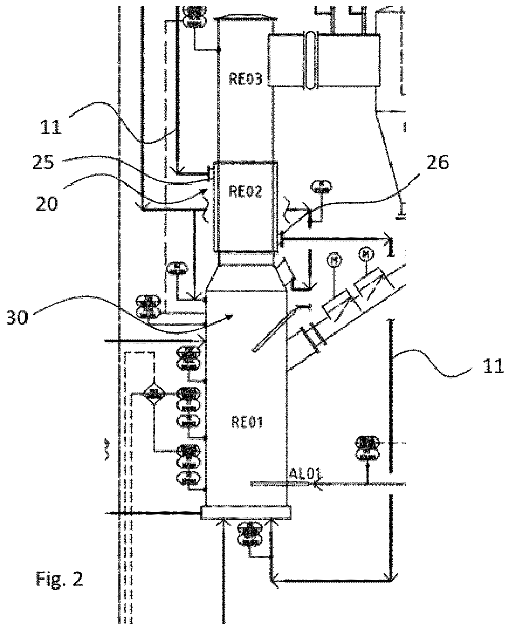

In **Figure 2** a reactor 30 according to an embodiment of the present invention is schematically illustrated. The reactor 30 comprises a preheater device 20, which is arranged around a first and/or second section 31, 32 of the reactor 30 and/or of an exhaust 33 of the reactor 30. Through an entrance 25, a first gas or gas mixture 11 can enter into the preheater device 20, wherein it is preheated. Through an exit 26, the first gas or gas mixture 21 leaves the preheater device 20 and is subsequently guided into the main part of the reactor 30, in particular to a heater device 36 of the reactor 30. The reactor 30 is preferably a spray roaster or a fluidized bed reactor for roasting a metal containing acid solution 1.

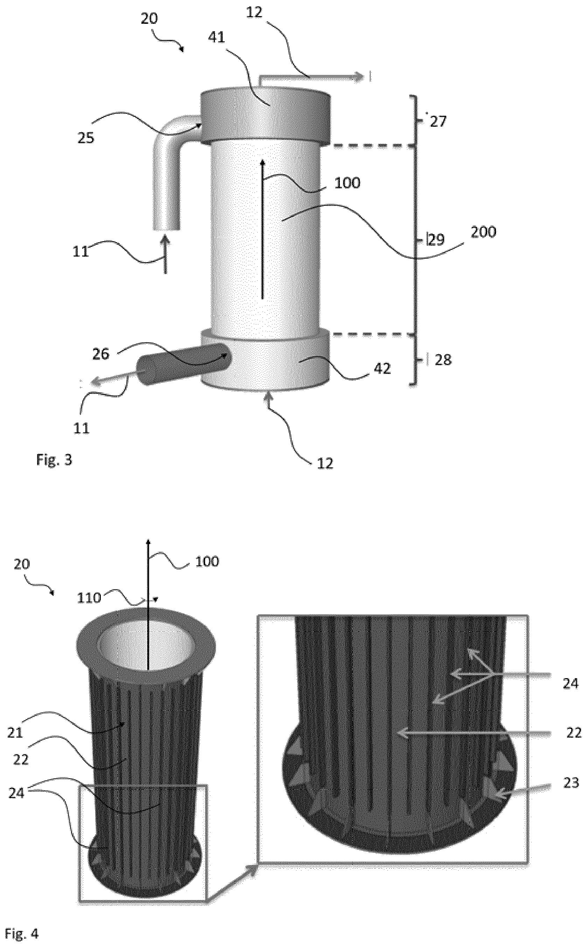

In **Figure 3** a preheater device 20 according to an embodiment of the present invention is schematically shown. The preheater device 20 comprises an upper part 27, an intermediate part 29 and a lower part 28. An entrance 25, through which a first gas or gas mixture 11 enters into the preheater device 20, is arranged at the upper part 27 of the preheater device 20. At the lower part 29 an exit 26, through which the first gas or gas mixture 11 leaves the preheater device 20, is arranged. The preheater device 20 comprises a radially outer wall 200, which has a greater diameter than a radially inner wall 22 such that the outer wall 200 is arranged around the inner wall 22 with a spacing between the two walls 22, 200. At the upper part 27 of the preheater device 20, an upper cylindrical element 41 is arranged around the outer wall 200. At the lower part 28 of the preheater device 20 a lower cylindrical element 42 is arranged around the outer wall 200. By means of the radially outer wall 200, the upper cylindrical element 41, the lower cylindrical element 42 and the radially inner wall 22, the preheating section 21 of the preheater device 20 is formed. The entrance 25 is formed in the upper cylindrical element 41 and the exit 26 is formed in the lower cylindrical element 42. By means of the plenum between the upper cylindrical element 41 and the outer wall 200, an improved circulation of the first gas or gas mixture 11 in the upper part 27 of the preheater device 20 can be achieved such that the first gas or gas mixture 11 is distributed more uniformly around the entire circumference of the preheater device 20 when it travels form the upper part 27 to the lower part 29. Likewise, the plenum between the lower cylindrical element 42 and the outer wall 200 contributes to a more uniform distribution of the first gas or gas mixture 11 in the preheating section 21 as well. Apart from the entrance 25 and the exit 26, the preheater device 20 has a (n-fold) rotational symmetry around axis 100. However, it is alternatively also conceivable that the preheater device 20 does not have a rotational symmetry. The preheater device 20 is arranged around a first and/or second section 31, 32 of a reactor 30 and/or gas exhaust 33. It is conceivable that the inner wall 22 of the preheater device 20 preferably also forms the reactor wall. Inside the first/second section 31, 32, a hot second gas or gas mixture 12 passes through the preheater device 20 such that a heat transfer between the first gas or gas mixture 11 and second gas or gas mixture 12 is established.

In **Figure 4** a preheater device 20 according to an embodiment of the present invention is schematically illustrated. In particular, a preheater device 20 without its radially outer wall 200 (and without the upper cylindrical element 41 and the lower cylindrical element 42) is illustrated in the left part of Figure 4 and a closeup around a lower section of the preheater device 20 is illustrated in the right part of Figure 4. A plurality of ribs 24 are attached to the radially inner wall 22 or formed as part of the radially inner wall 22. The ribs 24 extend into the preheating section 21. By means of the ribs 24, the contact surface for the first gas or gas mixture 11 (as well as the flow resistance) may be increased such that an improved heat transfer is possible. Moreover, the preheater device 20 comprises a plurality of reinforcement plates 23, some of which are arranged in the upper part 27 and some which are arranged in the lower part 29. Preferably, the reinforcement plates 23 are in contact with the radially inner wall 22. More preferably, the reinforcement plates 23 are arranged with equidistant spacing around the entire circumference of the preheater device 20.

In an alternative embodiment of the present invention, the ribs 24 (or at least some of the ribs 24) are arranged in circumferential direction 110 instead of being arranged in axial direction 100 as shown Figure 4. Other directions for the ribs 24, for instance diagonal ribs, are also conceivable.

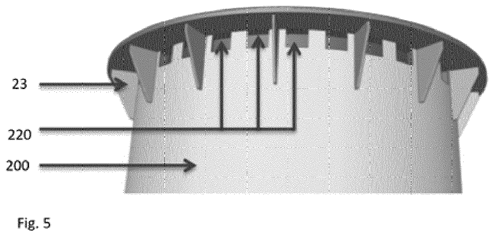

In **Figure 5** a close up of an upper part 27 of a preheater device 20 according to an embodiment of the present invention is schematically illustrated. In particular, the radially outer wall 200 of the preheater device 20 is shown. Said radially outer wall 200 is arranged around the radially inner wall 22 of the preheater device and/or reactor 30 and spaced from the inner wall 22 such that a volume (of the preheating section 21) is created between the outer and inner walls 22, 200. Moreover, reinforcement plates 23 are illustrated. The radially outer wall 200 comprises a plurality of openings 220. With the help of the openings 220, a first gas or gas mixture 11 may pass through the outer wall 200 into the preheating section 21 between the outer wall 200 and inner wall 22.

### REFERENCE SIGNS

- 1: metal containing acid solution
- 6: iron oxide
- 11: first gas or gas mixture
- 12: second gas or gas mixture
- 14: fuel
- 20: preheater device
- 21: preheating section
- 22: inner wall
- 23: reinforcement plate
- 24: rib
- 25: entrance
- 26: exit
- 27: upper part
- 28: lower part
- 29: intermediate part
- 30: reactor
- 31: first section
- 32: second section
- 33: exhaust
- 36: heater device
- 41: upper cylindrical element
- 42: lower cylindrical element
- 100: axial direction
- 110: circumferential direction
- 200: outer wall
- 220: opening

## Claims

1. Reactor (30) for treating a metal containing acid solution (1), in particular a pickling sludge, and/or for regenerating an acid component from a metal containing acid solution (1), wherein the reactor (30) is configured such that:
--- the metal containing acid solution (1) is fed to the reactor (30),
--- a fuel (14) and a first gas or gas mixture (11), comprising oxygen, are fed to a heater device (36) of the reactor (30),
--- by means of at least part of the fuel (14) and at least part of the first gas or gas mixture (11), a heated second gas or gas mixture (12) is formed in the reactor (30), **characterized in that** the reactor (30) comprises a preheater device (20) for preheating the first gas or gas mixture (11) by means of the second gas or gas mixture (12) before the first gas or gas mixture (11) is fed to the heater device (36).

2. Reactor (30) according to claim 1, wherein the preheater device (20) is configured such that a heat transfer between the first gas or gas mixture (11) and the second gas or gas mixture (12) is established by means of the preheater device (20) before the first gas or gas mixture (11) is fed to the heater device (36).

3. Reactor (30) according to any one of the preceding claims, wherein the heater device (36) is configured such that for forming the heated second gas or gas mixture (12) at least part of the fuel (14) is burned by means of at least part of the first gas or gas mixture (11).

4. Reactor (30) according to any one of the preceding claims, wherein the preheater device (20) is arranged at least partly around a first section (31) of the reactor (30) and/or at least partly around a second section (32) of a gas exhaust (33) of the reactor (30).

5. Reactor (30) according to any one of the preceding claims, wherein the preheater device (20) and/or the reactor (30) is configured such that the first gas or gas mixture (11) is passed through a preheating section (21) of the preheater device (20) before being fed to the heater device (36), wherein the preheating section (21) is bordered on its radially inner side at least partly by a radially inner wall (22) of the preheater device (20) and/or of the reactor (30), wherein preferably - by means of the radially inner wall (22) - a heat transfer between the preheating section (21) of the preheater device (20) and the first section (31) of the reactor (30) and/or the second section (32) of the gas exhaust (33) of the reactor (30) is established.

6. Reactor (30) according to any one of the preceding claims, wherein the preheater device (20) comprises ribs (24), wherein the ribs (24) are especially attached to the radially inner wall (22) of the preheater device (20) and/or of the reactor (30), wherein preferably at least part of the ribs (24) are arranged parallel to an axial direction (100) of the preheater device (20) and/or in a circumferential direction (110) around the radially inner wall (22).

7. Reactor (30) according to any one of the preceding claims, wherein the preheater device (20) comprises an entrance (25) and an exit (26), wherein the preheater device (20) is configured such that - by means of the entrance (25) - the first gas or gas mixture (11) enters into the preheater device (20), in particular into the preheating section (21) of the preheater device (20), wherein the preheater device (20) is configured such that - by means of the exit (26) - the first gas or gas mixture (11) exits the preheater device (20), in particular the preheating section (21) of the preheater device (20), wherein the entrance (25) is arranged at an upper part (27) of the preheater device (20), wherein the exit (26) is arranged at a lower part (28) of the preheater device (20), especially such that the exit (26) is closer to the heater device (36) than the entrance (25).

8. Reactor (30) according to any one of the preceding claims, wherein the reactor (30) comprises or is a roaster, preferably a spray roaster or a fluidized bed reactor.

9. Reactor (30) according to any one of the preceding claims, wherein the preheater device (20) is configured such that the first gas or gas mixture (11) is heated by means of the second gas or gas mixture (12) by at least 20°C, preferably by at least 40°C, more preferably by at least 60°C.

10. Reactor (30) according to any one of the preceding claims, wherein the metal containing acid solution (1) comprises an iron chloride component and an acid component, wherein the metal containing acid solution (1) especially further comprises a rinse water component, and/or a metal-salt component, wherein preferably the acid component comprises hydrochloric acid or is hydrochloric acid.

11. Reactor (30) according to any one of the preceding claims, wherein the reactor (30) is configured such that the metal containing acid solution (1) is at least partly hydrolyzed in the reactor (30), at least partly yielding an evaporated acid component and an iron oxide component (6), wherein the yielded evaporated acid component is part of the second gas or gas mixture (12).

12. Preheater device (20) for a reactor (30) according to any one of the preceding claims, wherein the preheater device (20) is suitable for preheating the first gas or gas mixture (11) by means of the second gas or gas mixture (12) before the first gas or gas mixture (11) is fed to the heater device (36).

13. Method for treating a metal containing acid solution (1), in particular a pickling sludge, and/or for regenerating an acid component from a metal containing acid solution (1), wherein the method comprises at least the following steps:
--- the metal containing acid solution (1) is fed to a reactor (30),
--- a first gas or gas mixture (11), comprising oxygen, and a fuel (14) are fed to a heater device (36) of the reactor (30),
--- by means of at least part of the fuel (14) and at least part of the first gas or gas mixture (11), a heated second gas or gas mixture (12) is formed in the reactor (30), **characterized in that** the first gas or gas mixture (11) is preheated by means of the second gas or gas mixture (12) before the first gas or gas mixture (11) is fed to the heater device (36).

14. Method according to claim 13, wherein the reactor (30) comprises a preheater device (20) for preheating the first gas or gas mixture (11) by means of the second gas or gas mixture (12), wherein by means of the preheater device (20) a heat transfer between the first gas or gas mixture (11) and the second gas or gas mixture (12) is established, wherein the preheater device (20) is preferably arranged at least partly around a first section (31) of the reactor (30) and/or at least partly around a second section (32) of a gas exhaust (33) of the reactor (30).

15. Method according to claim 14, wherein the first gas or gas mixture (11) is passed through a preheating section (21) of the preheater device (20) before being fed to the heater device (36), wherein the preheating section (21) is bordered on its radially inner side at least partly by a radially inner wall (22) of the preheater device (20) and/or of the reactor (30), wherein preferably - by means of the radially inner wall (22) - a heat transfer between the preheating section (21) of the preheater device (20) and the first section (31) of the reactor (30) and/or the second section (32) of the gas exhaust (33) of the reactor (30) is established.
